# EUROPÄISCHE PATENTSCHRIFT

(11) **EP 3 567 013 B1**
(45) Veröffentlichungstag und Bekanntmachung des Hinweises auf die Patenterteilung: **14.12.2022**
(21) Anmeldenummer: 19164254.5
(22) Anmeldetag: 21.03.2019
(51) Int. Cl.: C02F 11/148

(54) **SCHLAMMKONDITIONIERUNGSMITTEL UND VERFAHREN ZUR OPTIMIERUNG DER ENTWÄSSERUNG VON SCHLAMM**
SLUDGE CONDITIONING AGENT AND PROCESS FOR OPTIMIZING THE DEWATERING OF SLUDGE
AGENT DE CONDITIONNEMENT DE BOUES ET PROCÉDÉ PERMETTANT D'OPTIMISER LEUR DÉSHYDRATATION

(30) Priorität: 11.05.2018 AT 503952018
(43) Veröffentlichungstag der Anmeldung: 13.11.2019
(73) Patentinhaber: Kubinger, Ulrich, 4675 Weibern (AT)
(72) Erfinder: Kubinger, Ulrich, 4675 Weibern (AT)
(74) Vertreter: Hübscher & Partner Patentanwälte GmbH

(56) Entgegenhaltungen:
- EP-A1- 2 808 306
- CN-A- 106 430 878
- CN-A- 106 746 483

## Beschreibung

Die Erfindung bezieht sich auf ein Schlammkonditionierungsmittel gemäß Anspruch 1 und auf ein Verfahren zur Optimierung der Entwässerung von Schlamm aus einem biologischen Reinigungsprozess gemäß Anspruch 2.

Kommunale Abwässer werden beispielsweise mittels Belebungsverfahren gereinigt, wobei verschmutztes Wasser mit Hilfe von Bakterien gereinigt wird. Zusätzlich werden chemische Fällmittel eingesetzt um den Phosphatgehalt zu reduzieren. Anschließend wird das gereinigt Abwasser abgeleitet und der zurückbleibende Schlamm einer separaten Behandlung zugeführt. Nach dieser Behandlung bleibt Schlamm zur Entsorgung oder Verwertung übrig. Um den zur Entsorgung anstehenden Schlamm weitgehend von Wasser zu befreien werden Flockungshilfsmittel, wie Polymere oder dgl. zugegeben, und einem Entwässerungsaggregat zugeführt. Zur Entwässerung werden Entwässerungsvorrichtungen, beispielsweise Schneckenpressen, verwendet. Der entwässerte Schlamm soll einen möglichst geringen Flüssigkeitsanteil aufweisen.

Allerdings hat sich gezeigt, dass gerade im Hinblick auf das erzielbare Entwässerungsergebnis Verbesserungsbedarf besteht.

Ein generelles Problem in der Klärschlammentwässerung besteht in der Reproduzierbarkeit dauerhaft guter Ergebnisse, insbesondere über einen Jahreszeitenwechsel hinweg aufgrund variierender Zusammensetzung des Schlammes. Ein bestehendes Entwässerungsaggregat kann mit den permanent wechselnden Schlammeigenschaften nicht immer gleich gute Entwässerungsergebnisse erreichen. Durch den sich damit ergebenden nicht optimalen Entwässerungsgrad fallen bei der Klärschlammentsorgung hohe Kosten an.

Bislang kann ein konstant gutes Entwässerungsergebnis entweder nur durch eine permanente manuelle Nachjustierung von Durchflussmenge, Aggregateinstellung, Polymereinstellung u. dgl. oder durch Vorschalten einer Beschallungsanlage zur verbesserten Schlammentwässerung (A50223/2018) erreicht werden. CN106746483 und EP2808306 offenbaren Schlammkonditionierungsmittel zur Entwässerung von Schlamm. CN106430878 offenbart ein Verfahren zur Entwässerung von Schlamm, wobei der Schlamm mit Ultraschall beschallt wird, wonach dem Schlamm ein Konditionierungsmittel zudosiert wird und schließlich wobei der Schlamm einer Entwässerungsvorrichtung zugeführt wird.

Der Erfindung liegt somit die Aufgabe zugrunde, ein Schlammkonditionierungsmittel zur Optimierung der Entwässerung von Schlamm aus einem biologischen Reinigungsprozess anzugeben, mit welchem unabhängig von der Schlammzusammensetzung ein verbessertes, reproduzierbares Entwässerungsergebnis erzielt werden kann.

Die Erfindung löst die gestellte Aufgabe dadurch, dass das Schlammkonditionerungsmittel sich aus 20 - 80Gew. % MgX oder CaX, wobei X entweder ein Nitrat, ein Sulfat und/oder ein Chlorid ist, aus 2 - 50Gew. % einer 40 bis 60 %igen, insbesondere 50 %igen, Carbonsäure-Lösung, wobei die Carbonsäure eine Zitronensäure ist, und aus 2 - 20Gew. % einer 18 bis 38 %igen, insbesondere 28 %igen, FeY Lösung zusammensetzt, wobei Y entweder ein Nitrat, Sulfat und/oder Chlorid ist.

Das erfindungsgemäße Schlammkonditionierungsmittel wird dem Schlamm zudosiert, bevor er der Entwässerungsvorrichtung zugeführt und mit einem Flockungshilfsmittel versetzt und entwässert wird. Bei dieser Zudosierung sollte für eine gute Durchmischung von Schlamm und Schlammkonditionierungsmittel gesorgt werden. Wenn vor der Entwässerung eine Ultraschallbehandlung des Schlammes vorgesehen ist, wird das Schlammkonditionierungsmittel dem Schlamm zudosiert, bevor er der Ultraschallbehandlung unterworfen wird.

Zufolge der Vorbehandlung durch das erfindungsgemäße Mittel bei dem zu entwässernden Schlamm werden ideale und annähernd gleichbleibende Bedingungen für die Entwässerungsvorrichtung geschaffen. Die aktive Oberfläche im Schlamm wird verändert, womit sich das Flockungshilfsmittel besser an den Schlamm anbinden, bzw. die Schlammsuspension besser durchdringen kann, und mitunter scherstabilere Schlammflocken bildet. Dies führt zu einem verbesserten Entwässerungsergebnis.

Durch Zugabe von im erfindungsgemäßen Schlammkonditionierungsmittel enthaltenen Erdalkaliionen, wie z.B.: Calcium oder Magnesium, kann ein verbesserter Ladungsausgleich, aufgrund einer Veränderung der Schlammstruktur durch die Erdalkaliionen, zwischen dem Schlammgefüge und dem in der Regel polymeren Flockungshilfsmittel erfolgen. Das Flockungshilfsmittel kann somit seine Wirkung besser entfalten und am Schlamm anhaften, wodurch die Schlammflockenbildung begünstigt wird. Dies führt zu einem verbesserten und dauerhaft reproduzierbaren Entwässerungsergebnis. Die Zusätze an Erdalkaliionen werden als MgX oder als CaX dem System zugeführt, wobei X entweder Nitrat, Sulfat und/oder Chlorid ist.

Ebenso wird dem erfindungsgemäßen Mittel Zitronensäure, zur Verbesserung der Schlammentwässerungseigenschaften zugesetzt. Der Zusatz von Zitronensäure zur biologischen Abwasserreinigung wurde bisher vermieden, da dadurch unerwünschte Probleme auftreten. Besonders die komplexbildenden Eigenschaften der Carbonsäuren verhindern eine rasche und gute Fällung von gelösten Schadstoffen aus dem zu reinigendem Abwasser. Deshalb wurden Carbonsäuren bislang nicht in der Abwasserreinigung eingesetzt.

Während Carbonsäuren bei der Schadstoffentfernung als schädigend angesehen werden, können diese in der Schlammentwässerung nützliche chemisch-biologische Prozesse starten. So wird durch die bakterielle Vergärung von Zitronensäure, Oxalacetat gewonnen, welches ein essenzielles Produkt des Citratzyklus ist. Durch eine Anreicherung von Oxalacetat im Faulschlamm wird die Aktivität der Mikroorganismen nochmals angeregt. Dadurch wird die Struktur des Faulschlammes zusätzlich derart verändert, dass das gebundene Wasser besser freigegeben wird und das polymere Flockungshilfsmittel noch effizienter einwirken kann.

Der zu entwässernde Schlamm wird vorzugsweise unmittelbar nach der Anaerobie mit dem erfindungsgemäßen Mittel versetzt. Somit hat das erfindungsgemäße Mittel vor der Entwässerung eine genügend lange Durchmischungsstrecke, um die optimalen Wirkungen zu entfalten. Eine zu kurze Durchmischungsstrecke oder verfrühte Zugabe des Schlammkonditionierungsmittels kann dazu führen, dass die Schlammstruktur nicht genügend verändert wird und somit die Wirksamkeit sinkt. Durch die Verwendung des erfindungsgemäßen Schlammkonditionierungsmittels kann die Flockenbildung mittels des Flockungshilfsmittels schneller und einfacher erfolgen. Folglich reduziert sich insgesamt der Verbrauch an Flockungshilfsmitteln, wodurch eine weniger hohe Belastung an Kohlenwasserstoffverbindungen auftritt.

Um zu gewährleisten, dass außer den oben genannten Reaktionen keine unerwünschten Nebenreaktionen erfolgen, welche die verbesserten Entwässerungseigenschaften behindern, wird dem erfindungsgemäßen Mittel ein Katalysator auf Eisenbasis hinzugefügt. Dieser wird in Form von FeY dem System beigemengt, wobei Y entweder ein Nitrat, Sulfat und/oder Chlorid sein kann. Durch die Zugabe von Eisen werden Abbaureaktionen der Zitronensäure, chemisch unterbunden. Ebenso werden die Schlammkonditionierungseigenschaften des erfindungsgemäßen Mittels katalysiert, da durch den Zusatz von Eisen gewährleistet ist, dass die Erdalkaliionen, wie z.B.: Magnesium und Calcium, in für die Veränderung der Schlammstruktur erforderlicher, ionischer Form verfügbar sind.

Es empfiehlt sich insbesondere, wenn dem Schlamm 0,01 bis 5,0 l Schlammkonditionierungsmittel pro m³ Schlamm zudosiert werden. Das erfindungsgemäße Schlammkonditionierungsmittel kann auch unmittelbar vor einer Vorrichtung zur Optimierung der Entwässerung mittels Beschallung zugesetzt werden. Durch die Kombination des Schlammkonditionierungsmittels mit einer Vorrichtung zur Beschallung treten Synergieeffekte bei der der Bildung von scherstabilen Schlammflocken auf, wodurch das Entwässerungsergebnis deutlich verbessert wird. Dies lässt sich eindeutig durch Messungen des Trockensubstanzgehalts (TS) beziehungsweise des Trockenrückstandes (TR) des entwässerten Schlammes nachweisen.

Zudem wird neben der verbesserten Schlammentwässerung die Gasausbeute im Faulturm erhöht und damit die anfallende und zu entsorgende Schlammmenge reduziert.

Ausführungsbeispiele (nicht erfindungsgemäß):
Ein Schlammkonditionierungsmittel setzt sich beispielsweise aus 20 - 80Gew. % MgX oder CaX, 2 - 50Gew. % einer 40 bis 60 %igen, insbesondere 50 %igen, Carbonsäure-Lösung sowie 2 - 20Gew. % einer 18 bis 38 %igen, insbesondere 28 %igen, FeY Lösung zusammen.

Vorzugsweise setzt sich ein Schlammkonditionierungsmittel aus 20 - 80% einer Calciumsalz-Lösung, 10 - 50% einer Zitronensäure-Lösung, sowie 5 - 10% einer Eisen-dichlorid-Lösung zusammen.

Beispiel 1: Ein Schlammkonditionierungsmittel umfasst 65% einer Calciumsalz-Lösung, 30% einer Zitronensäurelösung und 5% einer Eisen-dichlorid-Lösung.

Beispiel 2: Ein Schlammkonditionierungsmittel umfasst 75% einer Calciumsalz-Lösung, 18% einer Zitronensäurelösung und 7% einer Eisen-dichlorid-Lösung.

## Patentansprüche

1. Schlammkonditionierungsmittel zur Optimierung der Entwässerung von Schlamm aus einem biologischen Reinigungsprozess, **dadurch gekennzeichnet, dass** es sich aus 20 - 80Gew. % MgX oder CaX, wobei X entweder ein Nitrat, ein Sulfat und/oder ein Chlorid ist, aus 2 - 50Gew. % einer 40 bis 60 %igen, insbesondere 50 %igen, Carbonsäure-Lösung, wobei die Carbonsäure eine Zitronensäure ist, und aus 2 - 20Gew. % einer 18 bis 38 %igen, insbesondere 28 %igen, FeY Lösung zusammensetzt, wobei Y entweder ein Nitrat, Sulfat und/oder Chlorid ist.

2. Verfahren zur Optimierung der Entwässerung von Schlamm aus einem biologischen Reinigungsprozess, insbesondere aus der Abwasseraufbereitung, welcher einer Entwässerungsvorrichtung zugeführt wird, **dadurch gekennzeichnet, dass** dem Schlamm bevor er einer Ultraschallbehandlung unterworfen wird und bevor er der Entwässerungsvorrichtung zugeführt und entwässert wird ein Schlammkonditionierungsmittel nach Anspruch 1 zudosiert wird.

3. Verfahren nach Anspruch 2, **dadurch gekennzeichnet, dass** je m³ Schlamm 0,01 bis 5,0l, insbesondere 0,1 bis 1l des Schlammkonditionierungsmittels zudosiert werden.

## Claims

1. Sludge conditioning agent for optimising the dewatering of sludge from a biological purification process, **characterised in that** it is composed of 20-80 wt.% MgX or CaX, wherein X is either a nitrate, a sulphate and/or a chloride, of 2-50 wt.% of a 40 to 60%, in particular 50%, carboxylic acid solution, wherein the carboxylic acid solution is a citric acid, and of 2-20 wt.% of an 18 to 38%, in particular 28%, FeY solution, wherein Y is either a nitrate, sulphate and/or chloride.

2. Method for optimising the dewatering of sludge from a biological purification process, in particular from waste water treatment, which sludge is supplied to a dewatering apparatus, **characterised in that**, before it undergoes an ultrasound treatment and before it is supplied to the dewatering apparatus and dewatered, the sludge has a sludge conditioning agent as claimed in claim 1 added to it.

3. Method as claimed in claim 2, **characterised in that** for each m³ of sludge 0.01 to 5.0 I, in particular 0.1 to 1 l of the sludge conditioning agent is added.

## Revendications

1. Agent de conditionnement des boues pour optimiser le drainage des boues issues d'un processus d'épuration biologique, **caractérisé en ce qu'**il se compose de 20 à 80% en poids de MgX ou de CaX, X étant un nitrate, un sulfate et/ou un chlorure, de 2 à 50% en poids d'une solution de 40 à 60%, en particulier à 50% d'acide carboxylique, l'acide carboxylique étant un acide citrique, et de 2 à 20% en poids d'une solution de 18 à 38%, en particulier à 28% de FeY, Y étant un nitrate, un sulfate et/ou un chlorure.

2. Procédé pour optimiser le drainage des boues issues d'un processus d'épuration biologique, en particulier du traitement des eaux usées, lesquelles sont conduites dans un dispositif de drainage, **caractérisé en ce qu'**avant que les boues soient soumises à un traitement par ultrasons et avant qu'elles soient conduites dans un dispositif de drainage et drainées, elles sont additionnées d'un agent de conditionnement des boues selon la revendication 1.

3. Procédé selon la revendication 2, **caractérisé en ce qu'**à chaque m³ de boues sont ajoutés de 0,01 à 5,0 l, en particulier de 0,1 à 1 l de l'agent de conditionnement des boues.
